# EUROPEAN PATENT APPLICATION

(11) **EP 2 228 771 A2**
(43) Date of publication of application: **15.09.2010**
(21) Application number: 10250441.2
(22) Date of filing: 10.03.2010
(51) Int. Cl.: G06T 11/60

(54) **Interactive contact lens simulation system and method**

(30) Priority: 11.03.2009 US 401662
(71) Applicant: Johnson & Johnson Vision Care Inc., Jacksonville, FL 32256 (US)
(72) Inventor: Kimura, Mitsunori, Tokyo 167-0022 (JP); Renna, Francesca, Jacksonvilee, Florida 32216 (US); O'Connell, Justin, Lisnagry, Limerick (IE)
(74) Representative: Tunstall, Christopher Stephen

(57) **Abstract**

An interactive contact lens simulation system including a user interactive device including a processor, a storage device storing executable code operative with the processor to display a viewing area on a user interactive device, display a digital image on a user interactive device, the digital image having a representation of at least one eye, display at least one image manipulation tool on a user interactive device wherein the at least one image manipulation tool is configured to modify a digital image on a user interactive device when engaged by a user, display at least one graphical representation of a contact lens on a user interactive device, and display at least one lens manipulation tool on a user interactive device wherein the at least one lens manipulation tool is configured to modify the at least one graphical representation of a contact lens when engaged by a user.

## Description

### TECHNICAL FIELD

The present invention relates to simulation systems and more particularly, to an interactive contact lens simulation system and method.

### BACKGROUND INFORMATION

Contact lenses have long been used as vision correction devices in place of traditional eyeglasses due to their relative practicality. Contact lenses are typically worn for their corrective and/or therapeutic qualities but are also worn for their appearance-altering effects, including color and/or tinting properties which alter the appearance of the eye. Although wearers often choose corrective contact lenses that have tinted and/or colored properties, use of cosmetic contact lenses, worn solely for their appearance-altering effects, has also increased significantly. Contact lenses that do not possess refractive or prescriptive qualities to correct vision and are solely intended to change the appearance of the eye are often called "planos." Planos are often worn by individuals with healthy eyes, who simply choose to change the apparent color of their eyes, but are also useful for individuals seeking to mitigate the effects of an ocular anomaly and/or deficiency. For example, ocular albinism can result from a severely reduced, or completely lacking, level of melanin in the iris and/or retina which causes the eyes to appear unnaturally red or pink. Heterochromia is another ocular condition wherein one iris is a different color than the other iris or part of one iris is a different color than the remainder of the iris. In either case, or in the case of an analogous ocular condition, an individual may require colored and/or tinted contact lenses to appropriately and effectively adjust the appearance of their eyes.

Many potential wearers of colored and/or tinted contact lenses are hesitant to purchase the contact lenses because they are unable to predict the effects of the contact lenses on their appearance. Accordingly, potential wearers often try on many, or sometimes all of the available, colors to determine which lens color they believe complements them best. This traditional trial-and-error practice results in substantial economic and material waste of diagnostic trial lenses along with a significant misuse of wearer and eye care practitioner time.

Systems have been developed in the art to allow a user to select both a model that most resembles their physical features and one or more colored contact lens pair in order to observe the colored lens effect on the appearance of the model. However, these systems lack significant utility as they are not personal to each individual potential wearer of the colored contact lenses. Furthermore, these systems are unable to provide features such as lid-cropping and lens-size adjustment, for example, and therefore generally provide an ineffective simulation.

Accordingly, there is a need for an effective contact lens simulation system capable of providing a user with a simulated image of his or her individual appearance when altered by colored contact lenses.

### BRIEF DESCRIPTION OF THE DRAWINGS

These and other features and advantages will be better understood by reading the following detailed description, taken together with the drawings wherein:

FIG. 1 illustrates a system overview schematic.

FIG. 2 illustrates a screen shot illustrating an introductory content page.

FIG. 3 illustrates a screen shot illustrating a questionnaire content page.

FIG. 4 illustrates an upload functionality content page.

FIG. 5 illustrates an image and lens manipulation content page.

FIG. 6 illustrates a frame selection content page.

FIG. 7 illustrates a share functionality content page.

FIG. 8 illustrates a send simulation image functionality content page.

FIG. 9 illustrates an exemplary system framework with some aspects of the present invention.

### DETAILED DESCRIPTION

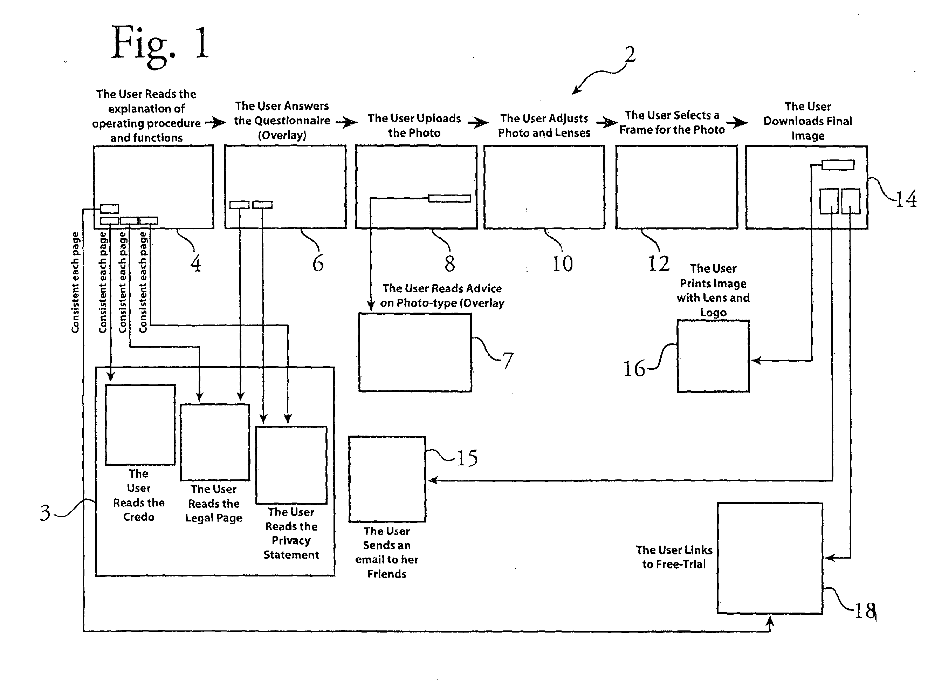

Referring to FIG. 1 a system overview schematic for one embodiment of an interactive contact lens simulation system 2 is shown as generally including a system flow beginning at an introduction display step 4 and continuing to an upload step 8, an image and lens manipulation step 10, and a download step 14. The system can also include a questionnaire step 6 at any point in the flow but shown in FIG. 1 as occurring after the introduction display step 4 and before the upload step 8. The system can also include a print step 16 or an email others 15 step in place of, in conjunction with, before, or after the download step 14 shown in FIG. 1. Optionally, the system can include a digital image upload information step 7 at any point prior to the image and lens manipulation step 10 but preferably in conjunction with or directly before the upload step 8. Also optionally, other relevant steps 3 can include displaying a company credo or mission statement, displaying legal information, displaying a privacy statement, or a free trial submission step 18, among many others. The system can further include screen displays for each step as described in detail below.

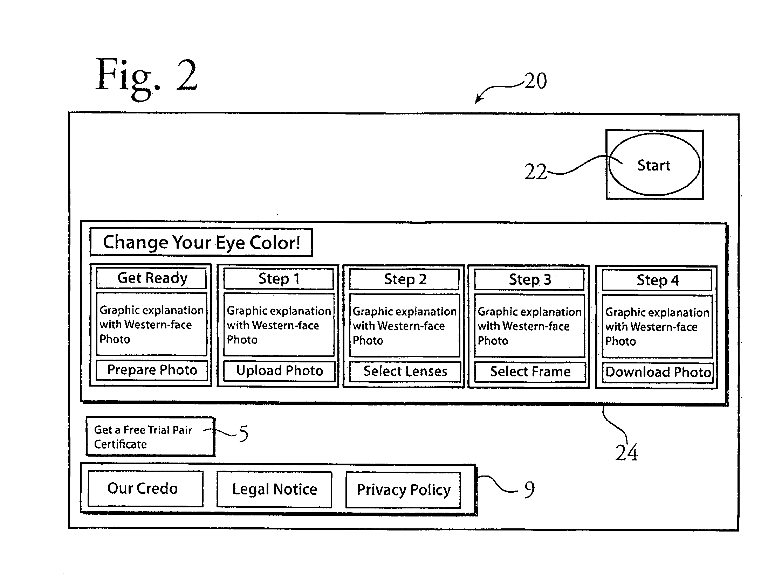

Referring to FIGS. 2-9, the exemplary embodiments of the simulation system 2 can be implemented in a thin client/server architecture utilizing HTTP requests to communicate with a server which is responsible for substantially all of the processing. Preferably however, the simulation system can be implemented through a Rich Internet Application ("RIA") platform which can include a plug-in such as Flash, Curl, or Silverlight, for example. The RIA can run in the browser environment on a personal computing station or mobile electronic device, for example, by utilizing a client engine, downloaded as part of the instantiation, to asynchronously communicate with a server. The asynchronous communication can then advantageously perform tasks such as pre-fetching allowing for substantially real-time interaction between the user and the web-based application. Utilizing an RIA can provide an improved user experience by allowing for functionality such as drag-and-drop uploading and by increasing the effectiveness of functionality such as sliders and zoom tools. Furthermore, server efficiency is increased due to both the shifting of task performance to the client engine and the handling of relatively more client requests concurrently by the same server made possible using asynchronous communication techniques.

Referring specifically to FIG. 2, one embodiment of an exemplary and optional introductory content page 20 is shown having an explanation of the steps of the system 24 and a means for allowing the user to continue such as the start button 22 shown in FIG. 2. The system can be implemented as software as discussed above, in which case the introductory screen display can be a web page of a browser, or more preferably, a content page or frame of an RIA. The start button 22 can be linked to another web or content page of the system 2 such that engagement with the start button 22 by a user through a user interface device such as a mouse, trackball, or keyboard for example, will load another content page of the system 2 either in place of the introductory content page 20, as an overlay, or in a new browser window. Similarly, other relevant links 23 may be associated with the introductory content page 20 as shown in FIG. 2.

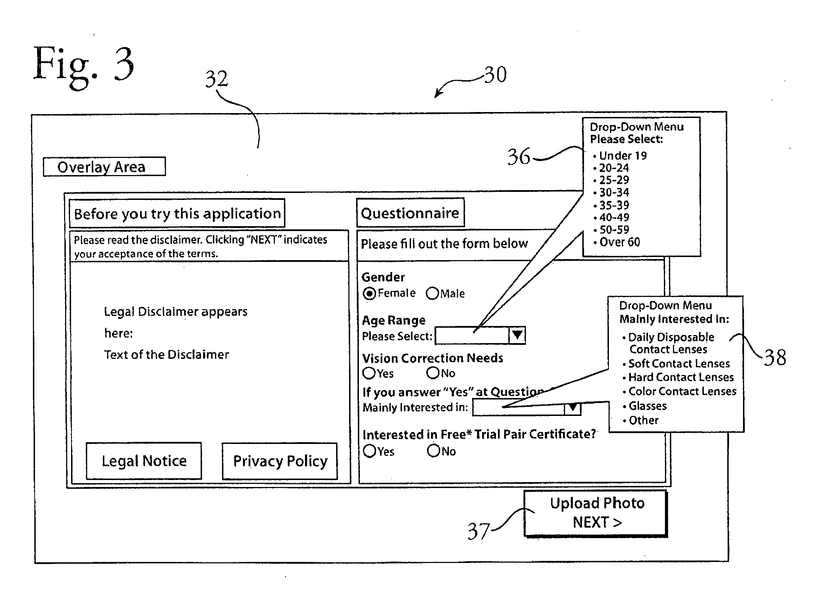

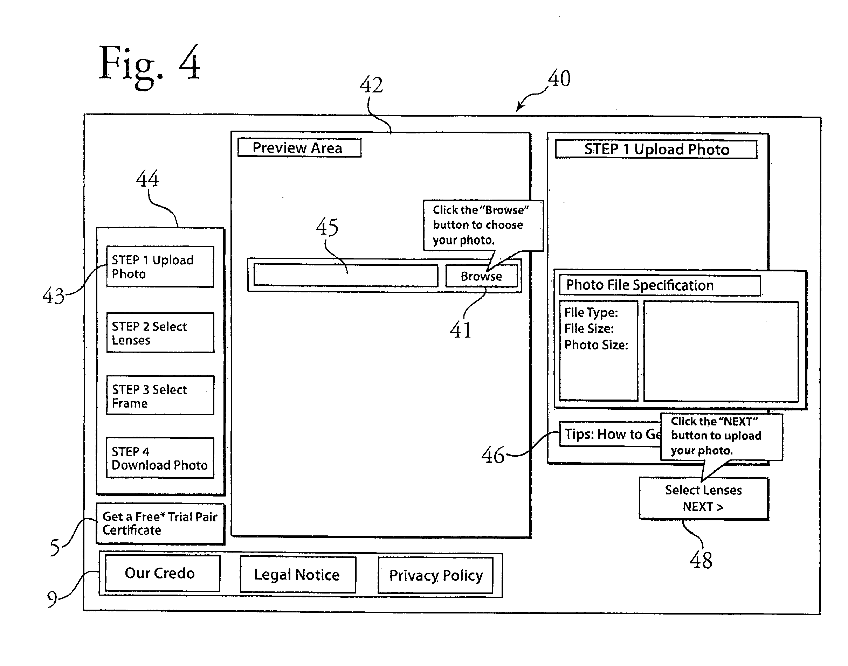

Clicking on a button such as a start button 22 shown of FIG. 2 can cause an optional questionnaire content page 30 to be displayed to the user, an example of which is shown in FIG. 3. Preferably, the questionnaire content page 30 can be displayed as an overlay 32 such that it is at least semi-transparent. Semi-transparency gives the user the impression that the questionnaire is optional and/or temporary and, that as soon as it is filled out and submitted or closed by the user, the RIA will cause another page to quickly be displayed such as an upload functionality content page 40. A questionnaire content page 30 can include questions 34 such as gender, age range, vision correction needs, contact lens interest, and free trial interest. Each question 34 can be associated with one or more input device such as radio button, drop-down menu, or check-box for example, such that upon submission by the user, the data is stored by the client engine and/or server such as by entry into a database such that the data is available for access at a later time. A drop-down menu for age selection 36 as well as a drop down menu for contact lens interest 38 are shown in FIG. 3 as examples of input devices. Submission can be accomplished by engagement by a user with a button such as a next button 37 as shown in FIG. 3. The next button 37 can be configured to both cause the client engine and/or server to store the data entered by the user and also cause an upload functionality content page 40 to be displayed as shown in FIG. 4.

Referring to FIGS. 4-9, each content page can include a viewing area 42 configured to display a digital image as uploaded by the user and manipulated by the user. Each content page can also include a process indicator 44 such as a collection of steps and an indication of the current step 43 such as bold letters as shown in FIG. 4 or a different color, for example. Each content page can also include other relevant links 9 as well as a link to a promotional page, such as a rebate or free trial submission page 5.

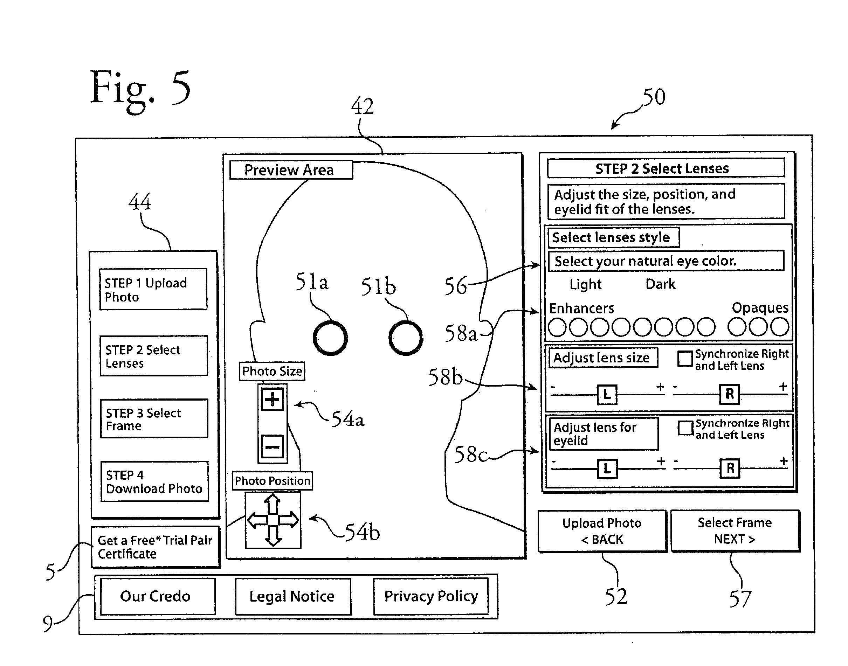

In one embodiment the system can proceed to an upload step 8, as shown in FIG. 1 as discussed above, by causing an upload/load functionality content page 40 to be displayed as shown in FIG. 4. The upload functionality content page 40 can include means for uploading a digital image or loading a series of digital images such as in the form of a live or real-time video feed or composite video, for example. Although the various embodiments are described using an exemplary digital image or, interchangeably, digital photo, it should be noted that the interactive contact lens simulation system 2 can be configured to alternatively upload a collection of digital images in the form of a digital video file or load a streaming video feed, for example. The digital image can also be a single image/frame of a video file or video feed. The means for uploading/loading at least one digital image can include a browse button 41, link, or input source defined on the upload functionality content page 40. In one embodiment, a browse button 41 can be configured to display the file system of a user's computer such that the user can traverse the file system and select the digital image file or video file to be used in the simulation system. In another embodiment, an input source button can be configured to receive an address for a live or real time video feed. Alternatively, or in conjunction with a browse button 41, the upload functionality can be performed by a text stream input 45 representing the local address of the digital image to be used in the simulation system. Also alternatively, the means for uploading a digital image can include an area defined on the upload functionality content page such that when an icon representing the digital image is dragged over the area and dropped, the digital image is uploaded by the client engine and/or server. An optional tips button or link 46 can be provided to display tips regarding the choice of photo, the tips link 46 is preferably configured to cause the text of the tips to be displayed in an overlay. The upload functionality content page can also include an upload submission button 48 configured to cause the client engine and/or the server to at least temporarily store, such as in a database, the digital image as selected by the user. Because the digital image selected by the user may not conform to the specifications determined by the system developer, the upload submission button 48 may also be configured to display the tips content page as discussed above. Specifications such as file type, file size, and photo size can be defined in and controlled by the system so as to allow for optimal system performance. For example, excessive photo size can cause slow operation of the system as the client engine and/or server must process a significant number of pixels as the user manipulates the image. Accordingly, preferably the file type is a JPEG file, the file size is not greater than one megabyte, and the photo size is 600 x 800 pixels. Once a user selects an appropriate digital image file which meets the system specifications, the upload submission button 48 can cause an image and lens manipulation content page 50 to be displayed, an example of which is shown in FIG. 5. Alternatively, a next button or link may dispose the upload functionality content page such that engagement with the next button can cause another content page to be displayed to the user. However, preferably, the upload submission button 48 and next button is the same button 48 as shown in FIG. 4.

In one embodiment, upon submission of a digital image by the user, an image and lens manipulation content page 50 as shown in FIG. 5 can be displayed as representing an image and lens manipulation step 10 shown in FIG. 1 as discussed above. In another embodiment, separate content pages can be displayed representing image manipulation functionality and lens manipulation functionality. In the embodiment shown in FIG. 5, the at least one digital image previously uploaded by the user can be displayed in the viewing area 42 and at least one graphical representation of a contact lens 51a, 51b can also be displayed in the viewing area. Preferably two graphical representations of a contact lens 51a, 51b are displayed in the viewing area wherein the graphical representations 51a, 51b are configured to be engaged and moved by a user through a user interface device and wherein one of the contact lenses is a graphical representation of a left contact lens 51a and the other contact lens is a graphics representation of a right contact lens 51b.

The image and lens manipulation content page 50 can also include at least one image manipulation tool 54. The image manipulation tool 54 can be graphically represented by at least one button, slider, or any other handler method of tactile interaction. Exemplary photo size 54a and photo position 54b buttons are shown in FIG. 5. However, an image manipulation tool 54 can be configured to effect luminosity, lines, shapes, value (lightness or darkness), texture, or pattern of the image, for example, in isolation or in conjunction. The photo size 54a and photo position 54b buttons are shown overlapping the viewing area 42 but can be disposed at any location on the image and lens manipulation content page 50. Upon engagement with a photo position button 54b for example, shown in FIG. 5 as four directional arrows, the digital image can be configured to move in the viewing area 42 as directed by the user depending on which arrow is engaged. Similarly, upon engagement with a photo size button 54a for example, shown in FIG. 5 as a plus sign and a minus sign, the digital image can be configured to be displayed in the viewing area 42 as zoomed in or zoomed out as directed by the user depending on which sign is engaged. Other image manipulation tools 54 can be a brightness tool, an image enhancer tool, a perspective angle viewing tool, or a frame type tool, for example.

The image and lens manipulation content page 50 can also include at least one lens manipulation tool 58 configured to modify the contact lens graphical representations 51a, 51b when engaged by a user through a user interface device. The lens manipulation tool 58 can be graphically represented by at least one button, slider, or any other handler method of tactile interaction. An exemplary lens color manipulation tool 58a is shown as a series of buttons representing different colors for the contact lenses. However, a lens manipulation tool 58 can be configured to effect luminosities, lines, shapes, values (lightness or darkness), textures, or patterns of the contact lenses, for example, in isolation or in conjunction. Optionally, the user can select the current natural eye color through an eye color button 56 and the system can present the appropriate lens colors for that natural eye color as a series of lens color buttons 58a as shown in FIG. 5. Also optionally, the lens color manipulation tool 58a can be a slider representing a full spectrum of color such that engagement by a user with the slider can cause the appropriate respective change in color of the graphical representations of the contact lenses 51a, 51b. Exemplary lens size 58b and lens eyelid 58c sliders are shown in FIG. 5 which can be configured to both increase and reduce the size of the graphical representations of the contact lenses 51a, 51b and to adjust the boundaries of the graphical representations 51a, 51b for potential eyelid overlap of the iris or any other portion of the eye, respectively. The sliders shown in FIG. 5 can be a separate slider for each left 51a and right 51b graphical representation or may be size and eyelid adjustment sliders for both graphical representations 51a, 51b. Should the sliders be separate, at least one synchronize tool 59a, 59b, shown as a check-box button in FIG. 5, can be provided such that engagement with the synchronize tool 59 by a user can cause any user interaction with either a left or a right lens manipulation tool 58 to effect both contact lens representations 51a, 51b in substantially the same manner. Accordingly, examples of lens manipulations tools 58 include, but are not limited to, left size, right size, left eyelid adjustment, right eyelid adjustment, left and right size synchronization, left and right eyelid adjustment synchronization, color, style, enhancement, and transparency.

The image and lens manipulation content page 50 shown in FIG. 5 can also include back 52 and next 57 buttons or links wherein user engagement with the buttons 52, 57 can cause the previous and the next content page to be displayed to the user, respectively. In the preferred embodiment, user engagement with the back button 57 can cause an upload functionality content page 40 to be displayed to the user and user engagement with the next button 57 can cause a frame selection page 60 to be displayed, although variations are also possible. User engagement with the next button 57 can also cause the client engine and/or server to save the current viewing area 42 to be redisplayed along with the next content page. Alternatively, a client engine can redisplay the next content page around the viewing area 42 such that no redisplay of the viewing area 42 is required.

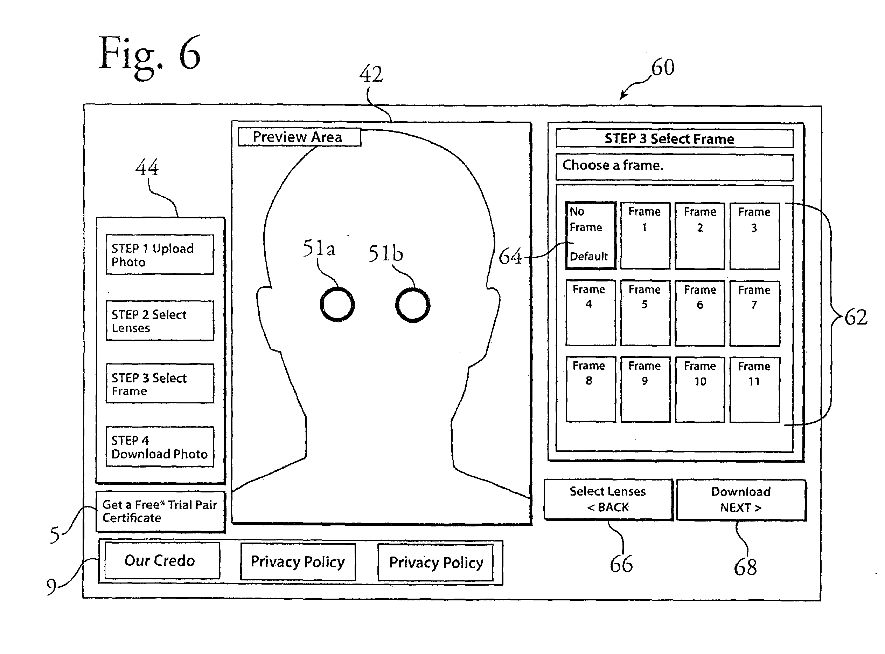

In one embodiment, a frame selection content page 60 can be displayed as shown in FIG. 6, as representing a frame selection step 12 as shown in FIG. 1 above. However, frame selection may also be incorporated into the system through the use of an image manipulation tool as discussed above. Should an optional frame selection content page 60 be utilized in the system, at plurality of frames 62 can be graphically represented such that engagement with a graphical representation of a frame 62 by a user can cause the frame to be displayed in the viewing area 42. Optionally, the default 64 may be no frame such that should the user fail to select a frame prior to leaving the frame selection content page 60, the client engine and/or server can cause the viewing area to be saved absent a frame 62.

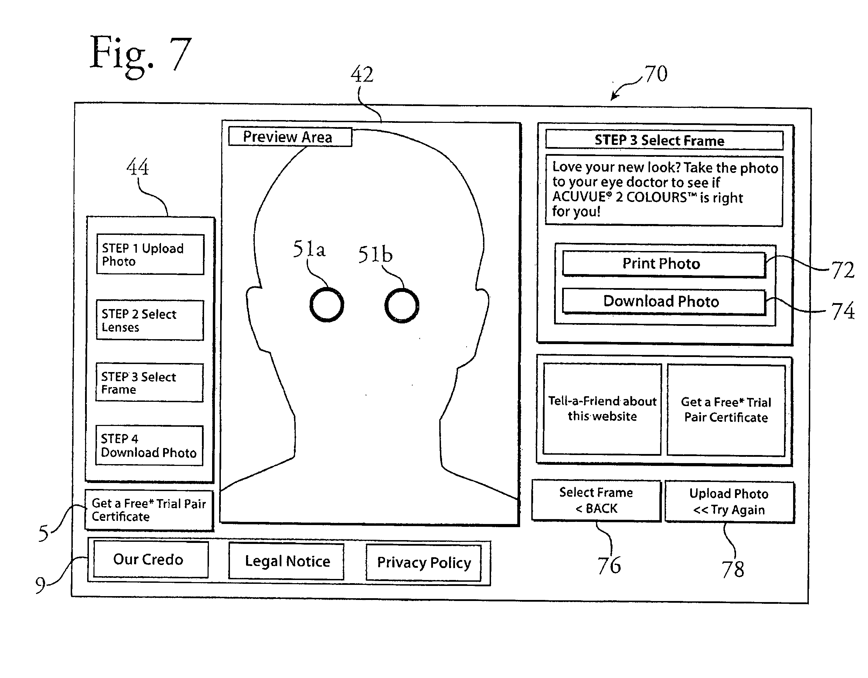

The frame selection content page shown in FIG. 6 can also include back 66 and next 68 buttons wherein user engagement with the buttons 66, 68 can cause the previous and the next content page to be displayed to the user, respectively. In the preferred embodiment, user engagement with the back button 66 can cause an image and lens manipulation content page 50 to be displayed and user engagement with the next button can cause a share functionality content page 70 to be displayed, although variations are also possible. User engagement with the next button 68 can also cause the client engine and/or server to save the current viewing area 42 to be redisplayed along with the next content page. Alternatively, a client engine can redisplay the next content page around the viewing area 42 such that no redisplay of the viewing area 42 is required. In one embodiment, a share functionality content page 70 can be displayed as shown in FIG. 7, as representing a download step 14 as shown in FIG. 1 as discussed above. However, download and/or print tools can also be incorporated into the image and lens manipulation content page 50 and/or the frame selection content page 60 as buttons or links, for example. In the preferred embodiment, download and/or print tools are provided on a share functionality content page 70 such that user engagement with the button or link, for example, can cause the client engine and/or server to receive a download input and/or a print input and send the input to a user's computer and specifically, the computer's operating system, in order to cause the computer to download and/or print the digital image. An exemplary download button 72 is shown in FIG. 7. User engagement with the download button 72 can cause the operating system of the user's computer to display the computer's file system such that the user can select a file name and/or a folder for storage of an image as is well known in the art. User engagement with the print button 74 can cause the operating system to issue a print command which can cause an image to be printed to an attached or network printer according to the user's input and/or preference and as is well known in the art. The image to be downloaded or printed can be that image shown in the current viewing area 42 of the respective content page such as the image shown in the viewing area 42 of a share functionality content page 70 as shown in FIG. 7. The downloaded digital image can then be shared electronically, or the printed image can be shared physically, with an eye care practitioner thereby significantly reducing the time and effort required, by both the wearer and the practitioner, to determine the wearer's preferred contact lens composition. The share functionality content page 70 can also include at least one share tool (not shown) such as at least one button or link, for example, such that user engagement with the button or link can cause the client engine and/or server to share the digital image such as by syndication such as Really Simple Syndication (RSS), for example, or by social media distribution.

The share functionality content page 70 shown in FIG. 7 can also include back 76 and next 78 buttons wherein user engagement with the buttons 76, 78 can cause the previous and the next content page to be displayed to the user, respectively. In the preferred embodiment, user engagement with the back button 76 can cause a frame selection content page 60 to be displayed and user engagement with the next button 78 can cause an upload functionality content page 40 to be displayed thereby effectively restarting the system, although variations are also possible.

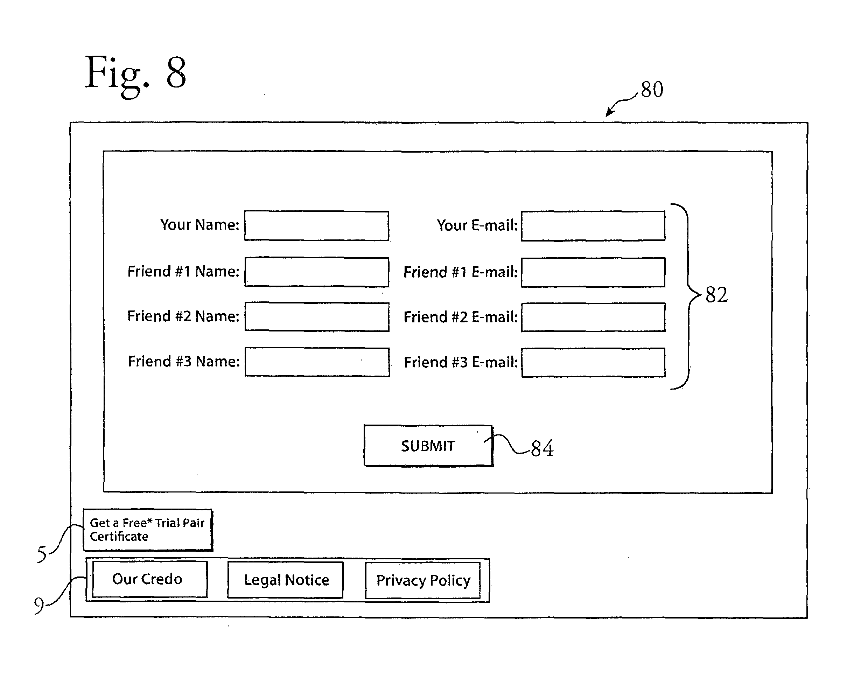

In one embodiment a share functionality content page 70 can also include an e-mail others tool 73 such as the button shown in FIG. 7, for example. User engagement with an e-mail others tool 73 can cause the image currently in the viewing area 42 to be at least temporarily stored by the client engine and/or server as well as cause a send simulation image functionality content page 80 to be displayed as shown in FIG. 8. The send simulation image functionality content page 80 can include a plurality of input text boxes 82 such that the user can direct to whom the previously stored image should be sent. For example, sending the image to an eye care practitioner can save significant time and effort in determining the user's preference for contact lenses as discussed above. A submit button 84 or link may be provided on the send simulation image functionality content page 80 such that user engagement with the submit button 84 can cause an e-mail to be sent by the client engine and/or server to specific e-mail addresses as directed by the user. The submit button 84 can also cause a share functionality page 70 to be displayed as shown in FIG. 7, cause an upload functionality content page 40 to be displayed as shown in FIG. 4, thereby effectively restarting the system, or cause the web browser to close thereby ending the session, for example.

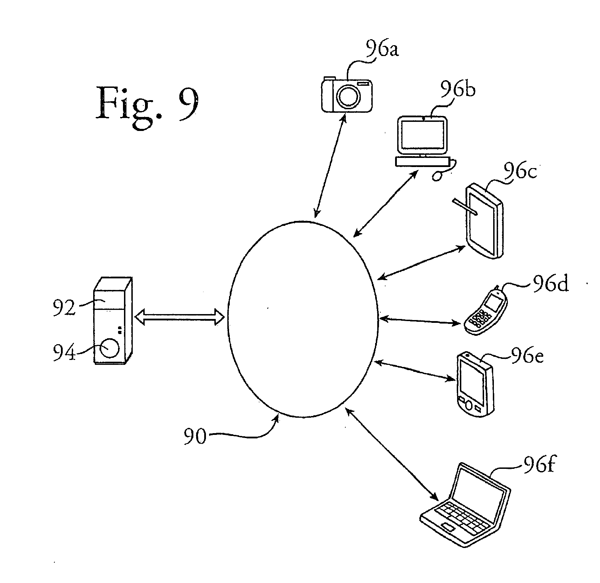

Referring to Fig. 9, an exemplary system 2 framework is shown a including a network 90, a user interactive device 96, and a server 92 having a storage device 94. In one embodiment of an interactive contract lens simulation system 2, the network 90 is a wide area network such as the Internet and the server 92 is a web server. However, in another embodiment the network 90 can be a local area network or any other type of communications infrastructure and in yet another embodiment no network is utilized in the system 2. The system 2 can include a user interactive device 96 having a processor such as a digital camera 96a, a desktop personal computer 96b, a tablet personal computer 96c, a cellular telephone or smart phone, a personal digital assistant 96e, a laptop personal computer 96f, or any other digital device having a processor, for example. An interactive contact lens simulation system 2 can also include a storage device 94 such as a magnetic storage device (e.g., magnetic tape and/or hard disk drive), optical storage device, semiconductor memory device such as Random Access Memory (RAM) and/or Read Only Memory (ROM), or any other type of memory that is capable of storing executable code. The storage device 94 can be disposed in the server 92, in the user interactive device 96, as a network resource accessible by at least one networked user interactive device, or as a removable storage device such as flash memory card or compact disc, for example. In a preferred embodiment, the server 92 is a web server having a hard disc storage device 94 storing executable code configured to operate over the Internet with the processor of a web-enabled user interactive device 96 to display various content pages of the system 2, as described above, on the user interactive device 96.

While the principles of the invention have been described herein, it is to be understood by those skilled in the art that this description is made only by way of example and not as a limitation as to the scope of the invention. Other embodiments are contemplated within the scope of the present invention in addition to the exemplary embodiments shown and described herein. Modifications and substitutions by one of ordinary skill in the art are considered to be within the scope of the present invention, which is not to be limited except by the following claims.

## Claims

1. An interactive contact lens simulation system, comprising:
a user interactive device including a processor;
a storage device, the storage device storing executable code, wherein the executable code is executable on demand and operative with the processor to:
display a viewing area on a user interactive device;
display a digital image on a user interactive device, the digital image having a representation of at least one eye;
display at least one image manipulation tool on a user interactive device wherein the at least one image manipulation tool is configured to modify a digital image on a user interactive device when engaged by a user;
display at least one graphical representation of a contact lens on a user interactive device wherein the at least one graphical representation of a contact lens is configured to be moveable on a user interactive device by a user; and
display at least one lens manipulation tool on a user interactive device wherein the at least one lens manipulation tool is configured to modify the at least one graphical representation of a contact lens when engaged by a user.

2. The interactive contact lens simulation system of claim 1 wherein the digital image includes a graphical representation of a right human eye and a graphical representation of a left human eye and wherein the at least one graphical representation of a contact lens includes a graphical representation of a right contact lens and a graphical representation of a left contact lens.

3. The interactive contact lens simulation system of claim 1 wherein the user interactive device further includes a database wherein the database is configured to store the digital image.

4. The interactive contact lens simulation system of claim 1 further including executable code operative with the processor to display a download tool wherein the download tool is configured to communicate with a user's computer to store a digital image.

5. The interactive contact lens simulation system of claim 1 further including executable code operative with the processor to display a print tool wherein the print tool is configured to communicate with a user's computer to print a digital image.

6. The interactive contact lens simulation system of claim 1 further including executable code operative with the processor to display at least one share tool.

7. An interactive contact lens simulation method, comprising:
receiving at least one digital image from a user wherein the at least one digital image includes at least one representation of an eye;
providing a viewing area wherein the viewing area is configured to display the at least one digital image;
receiving at least one image manipulation input from a user wherein the at least one image manipulation input is configured to modify the at least one digital image;
providing at least one graphical representation of a contact lens wherein the at least one graphical representation of a contact lens is configured to be moveable by a user; and
receiving at least one lens manipulation input from a user wherein the at least one lens manipulation input is configured to modify the at least one graphical representation of a contact lens.

8. The interactive contact lens simulation method of claim 7 wherein the at least one representation of an eye includes a representation of a right eye and a representation of a left eye and the at least one graphical representation of a contact lens includes a graphical representation of a right contact lens and a graphical representation of a left contact lens.

9. The interactive contact lens simulation system of claim 1 or method of claim 7 wherein the at least one image manipulation tool or input is selected from the group consisting of size, position, enhancement, zoom, brightness, perspective angle, frame type, line, shape, color, value, texture, pattern, luminosity, and holographic effect.

10. The interactive contact lens simulation system of claim 1 or method of claim 7 wherein the at least one lens manipulation tool or input is selected from the group consisting of left size, right size, left eyelid adjustment, right eyelid adjustment, left and right size synchronization, left and right eyelid adjustment synchronization, color, style, enhancement, transparency, line, shape, value, texture, pattern, luminosity, and holographic effect.

11. The interactive contact lens simulation method of claim 7 further including storing the digital image in a database.

12. The interactive contact lens simulation method of claim 11 further including retrieving the digital image from the database.

13. The interactive contact lens simulation method of claim 7 further including receiving a download input from a user wherein the download input is configured to store the digital image on a user's computer.

14. The interactive contact lens simulation method of claim 7 further including receiving a print input from a user wherein the print input is configured to communicate with a user's computer to print the digital image.

15. The interactive contact lens simulation system of claim 1 or method of claim 7 wherein the at least one digital image is selected from the group consisting of a digital image file, a digital video file frame, a digital video feed frame, a digital video stream frame, or the at least one digital image is a series of digital images wherein the series of digital images is selected from the group consisting of a digital video file, a digital video feed, and a digital video stream.

16. The interactive contact lens simulation system of claim 7 further including receiving at least one share input from a user.
